# FASCICULE DE BREVET EUROPEEN

(11) **EP 0 370 933 B1**
(45) Date de publication et mention de la délivrance du brevet: **15.06.1994**
(21) Numéro de dépôt: 89440126.4
(22) Date de dépôt: 17.11.1989
(51) Int. Cl.: A01D 78/10, A01D 69/08, F16D 3/18

(54) **Machine agricole, notamment pour la fenaison, ayant un châssis articulé**
Landmaschine, insbesondere für die Heuwerbung mit einem mehrteiligen schwenkbaren Rahmen
Agricultural machine, especially for hay-making, with a articulated frame

(30) Priorité: 21.11.1988 FR 8815492; 24.01.1989 FR 8900988
(43) Date de publication de la demande: 30.05.1990
(73) Titulaire: KUHN S.A., F-67700 Saverne (FR)
(72) Inventeur: Quirin, Michel, F-67310 Wasselonne (FR)
(74) Mandataire: Andres, Jean-Claude

(56) Documents cités:
- EP-A- 0 141 639
- EP-A- 0 270 052
- EP-A- 0 296 666
- DE-A- 1 507 338
- DE-B- 1 288 371
- DE-C- 56 861
- DE-C- 587 806
- DE-U- 8 712 441
- FR-A- 1 251 794
- FR-A- 1 417 077
- FR-A- 2 274 827
- GB-A- 2 057 239
- US-A- 1 348 630
- US-A- 2 261 901
- US-A- 2 281 913
- US-A- 2 496 871
- fordern und heben vol. 12, no. 3, mars 1962, mainz de schmidt:"elastischeweitwinkel-gelenkkupplung "

## Description

La présente invention se rapporte aux machines agricoles notamment pour la fenaison, possédant un châssis portant plusieurs rotors entraînés en rotation autour d'axes dirigés vers le haut, lequel châssis se compose d'un tronçon central et de tronçons latéraux qui sont reliés entre eux au moyen d'articulations comportant chacune un axe de pivotement permettant les déplacements des tronçons latéraux et de leurs rotors pour suivre les dénivellations du sol durant le travail et pour la mise en position de transport, des arbres d'entraînement pour les différents rotors étant logés dans les tronçons du châssis, ces arbres étant eux-mêmes reliés entre eux au moyen d'accouplements situés au niveau des articulations entre lesdits tronçons.

Une machine de ce genre, connue dans la demande de brevet GB-A-2 057 239, comporte un tronçon central avec à chacune de ses extrémités un tronçon latéral repliable vers le haut pour le transport. Les accouplements entre les arbres d'entraînement des rotors sont constitués par des doubles joints de cardan. De tels joints ne peuvent cependant pas transmettre de mouvement d'entraînement lorsque les tronçons latéraux sont repliés de près de 90° ou plus. Ils doivent aussi pouvoir coulisser par rapport à au moins un des arbres d'entraînement lors du déplacement des tronçons latéraux du châssis. De ce fait, il est nécessaire de prévoir entre au moins un des arbres d'entraînement et le double joint une liaison qui permet à ce dernier de glisser dans le sens axial sur ledit arbre. Ceci demande des usinages très précis et donc coûteux sur les deux pièces. Il faut également constamment surveiller les surfaces qui glissent pour les maintenir propres et graissées, afin d'éviter l'endommagement ou la rupture du double joint. En sus, en cas d'usure au niveau de ces pièces qui coulissent, il est nécessaire de procéder à d'importants remplacements. Les pièces constituant ces articulations ne sont effectivement pas facilement séparables. Par conséquent, il est pratiquement nécessaire de remplacer toute l'articulation lorsque des pièces sont endommagées.

Par ailleurs, les articulations du type double joint de cardan sont relativement chères, ce qui augmente le prix de la machine qui en est équipée et occasionne d'importantes dépenses dans le cas d'un remplacement. Ces articulations nécessitent en plus un espace relativement important, ce qui accroît la largeur de la machine en position de transport.

Le brevet FR-A-1 251 794 se rapporte à des accouplements articulés entre deux arbres montés rotativement dans des fourches articulées l'une sur l'autre. Dans une première forme de réalisation, l'accouplement se compose de brides qui sont fixées sur les extrémités des arbres et qui portent des cames ou dents engrènant entre elles sur pratiquement toute leur longueur lorsque les arbres de transmission sont alignés. Ces cames ou dents sont relativement courtes et sont dirigées parallèlement auxdits arbres. Lors du déplacement angulaire d'une des fourches autour de son point d'articulation avec l'autre fourche, l'angle entre les deux arbres se modifie, tandis que les cames ou dents restent en prise.

Cet agencement ne permet toutefois de déplacer les arbres accouplés que dans une seule direction à partir de la position horizontale. En sus, l'angle de déplacement est limité à 90°. Pour ces raisons, il ne peut pas être employé sur une machine de fenaison.

Dans une deuxième forme de réalisation, l'accouplement se compose d'une bride avec des cames ou dents relativement courtes et dirigées parallèlement à l'arbre de transmission correspondant et d'une deuxième bride avec des cames ou dents dirigées perpendiculairement à l'arbre de transmission correspondant. Ces cames ou dents engrènent entre elles et permettent un déplacement angulaire de 180° d'un des arbres de transmission.

Ce déplacement n'a également lieu que dans une seule direction à partir de la position horizontale. Par ailleurs, les deux brides sont différentes l'une par rapport à l'autre. Il est donc nécessaire d'avoir des outillages différents pour réaliser cet accouplement, ce qui provoque un renchérissement. Cela entraîne également une gestion plus lourde des différentes pièces aussi bien chez le constructeur que chez l'utilisateur.

Les brevets US-A-1 348 630 et US-A-2 496 871 se rapportent également à des accouplements entre deux arbres de transmission. Chacun de ces accouplements présente deux ensembles de petites cames ou dents qui engrènent sur toute leur longueur lorsque les arbres sont alignés. Ils ne permettent de déplacer les arbres accouplés que dans une seule direction à partir de la position horizontale. Ces accouplements ne peuvent donc pas être utilisés sur les machines de fenaison.

La présente invention a pour but de remédier aux inconvénients des accouplements précités. Elle doit notamment proposer une machine de fenaison sur laquelle les accouplements entre les arbres d'entraînement des rotors sont plus fiables et plus simples que les accouplements connus, et sont aptes à transmettre le mouvement d'entraînement aussi bien dans la position de travail dans laquelle les tronçons latéraux du châssis doivent pouvoir pivoter vers le bas et vers le haut par rapport au tronçon central que dans la position de transport dans laquelle lesdits tronçons latéraux sont déplacés vers le haut de plus de 90°.

A cet effet, une importante caractéristique de l'invention consiste en ce que chaque accouplement entre les arbres d'entraînement des rotors est constitué par deux ensembles de doigts disposés en forme de cercles sur des flasques ou moyeux, que les axes géométriques des axes de pivotement entre les tronçons du châssis sont sensiblement tangents à la circonférence des cercles sur lesquels se situent les axes géométriques des doigts, que chaque ensemble de doigts est lié rigidement à l'extrémité d'un arbre d'entraînement de telle sorte que les doigts de deux ensembles voisins engrènent entre eux, que chaque doigt possède une partie active dont la longueur est nettement supérieure à la longueur sur laquelle lesdits doigts engrènent entre eux lorsque les arbres d'entraînement correspondants sont horizontaux et que l'espace qui subsiste dans cette position horizontale entre les extrémités avant des doigts de l'un des ensembles et le flasque ou moyeu de l'autre ensemble de doigts est tel que chaque tronçon latéral du châssis et l'arbre d'entraînement correspondant puissent pivoter vers le bas d'un angle d'au moins 5° et vers le haut d'un angle supérieur à 90° en conservant l'engrènement des doigts.

Dans ce mode de réalisation, chaque dispositif d'accouplement comporte des doigts qui engrènent entre eux quelle que soit la position des tronçons latéraux par rapport au tronçon central du châssis. Ils peuvent ainsi transmettre le mouvement d'entraînement d'un tronçon à l'autre dans la position de travail, la position de transport et durant la transposition entre ces deux positions. L'opérateur peut donc relever ou abaisser les tronçons latéraux du châssis sans qu'il soit nécessaire de couper l'entraînement.

D'autre part, durant les déplacements des tronçons latéraux du châssis, les doigts restent immobiles par rapport à l'arbre d'entraînement sur lequel ils sont montés. Il n'y a donc aucun glissement au niveau des arbres d'entraînement. La liaison entre les doigts et les arbres d'entraînement est par conséquent moins délicate et ne nécessite pas une constante surveillance pour éviter l'endommagement des accouplements.

En sus, l'accouplement est constitué par des pièces simples pouvant être obtenues à un moindre coût.

Ces pièces peuvent aisément être séparées, ce qui facilite leur montage et leur remplacement. Enfin, l'encombrement de ces pièces est moindre. De ce fait, cet accouplement permet de réaliser une machine ayant une largeur de transport plus faible qu'une machine équipée de doubles joints de cardan tout en ayant la même largeur de travail.

Par ailleurs, grâce au fait que les doigts possèdent une longueur active qui est nettement supérieure à la longueur sur laquelle ils engrènent entre eux dans la position horizontale et que l'espace qui subsiste dans cette position horizontale entre les extrémités avant des doigts de l'un des ensembles et le flasque ou moyeu de l'autre ensemble de doigts est tel que chaque tronçon du châssis et l'arbre d'entraînement correspondant puissent pivoter vers le bas et vers le haut, les rotors peuvent bien suivre toutes les dénivellations du sol durant le travail et les tronçons latéraux peuvent être déplacés vers le haut de plus de 90° pour le transport.

L'axe géométrique de l'axe de pivotement de l'une ou plusieurs articulations entre les tronçons du châssis est dirigé dans la direction d'avancement de la machine et est avantageusement tangent à la moitié supérieure de la circonférence des cercles sur lesquels se situent les axes géométriques des doigts de l'accouplement correspondant. Ledit axe géométrique s'étend avantageusement à proximité de la partie ou paroi supérieure desdits tronçons. D'autre part, chaque ensemble de doigts peut comporter un flasque dont la dimension extérieure est inférieure à la distance entre les parties actives de deux doigts diamétralement opposés.

Ces caractéristiques permettent de replier le ou les tronçons vers le haut, jusque dans une position dans laquelle ils sont pratiquement parallèles aux tronçons voisins auxquels ils sont reliés. Lors de ce repliement, plusieurs doigts des accouplements entre les arbres d'entraînement des rotors restent en engrènement et sont capables de transmettre le mouvement d'un arbre à l'autre.

L'encombrement de la machine peut ainsi être considérablement réduit sans qu'il soit nécessaire de prendre des mesures particulières pour protéger les moyens d'entraînement des rotors.

Une autre caractéristique de l'invention consiste en ce que les doigts sont fixés de manière démontable sur des flasques reliés aux extrémités des arbres d'entraînement des rotors de la machine. Chaque doigt peut ainsi facilement être individuellement remplacé en cas de nécessité.

Selon une autre caractéristique de l'invention, la position des doigts sur leur flasque est réglable. L'utilisateur peut ainsi rattraper un jeu trop important entre les doigts qui engrènent, par une simple rotation de ces derniers autour de leurs axes respectifs. De ce fait, il n'est pas nécessaire de remplacer les doigts très souvent.

Les doigts peuvent être cylindriques et comporter une extrémité en forme de tronc de cône aux arêtes arrondies. Cet agencement favorise les déplacements des doigts de deux ensembles qui engrènent autour des axes de pivotement des tronçons correspondants du châssis.

Les doigts peuvent aussi comporter une partie active de forme ovoïde. Dans ce cas, le contact entre les doigts des ensembles qui engrènent est pratiquement ponctuel. Ceci permet de déplacer un des ensembles autour de l'axe de pivotement du tronçon correspondant du châssis tout en maintenant le contact entre tous les doigts qui engrènent.

Chaque doigt peut aussi être réalisé en plusieurs parties. Ainsi leur partie avant peut être munie d'une bague ou d'un galet à travers lequel s'effectue le contact à l'engrènement. Cette bague ou ce galet peut facilement être remplacé en cas d'usure.

D'autres caractéristiques et avantages de l'invention ressortiront des revendications et de la description ci-après d'exemples de réalisation non limitatifs de l'invention, avec référence aux dessins annexés dans lesquels :
- la figure 1 représente une vue arrière d'une machine selon l'invention,
- la figure 2 représente, à plus grande échelle, l'accouplement entre les arbres d'entraînement des rotors, dans la position de travail,
- la figure 3 représente une vue de l'accouplement suivant la flèche F de la figure 2,
- la figure 4 représente l'accouplement entre les arbres d'entraînement des rotors dans la position de transport,
- la figure 5 représente une vue de détail d'un doigt de l'accouplement,
- la figure 6 représente une vue analogue d'un autre mode de réalisation d'un doigt de l'accouplement,
- la figure 7 représente également une vue analogue d'un autre mode de réalisation d'un doigt de l'accouplement,
- la figure 8 représente en coupe un autre exemple de réalisation de l'accouplement selon l'invention en position de travail,
- la figure 9 représente en coupe l'accouplement selon la figure 8 en position de transport,
- la figure 10 représente l'accouplement suivant la flèche G de la figure 9.

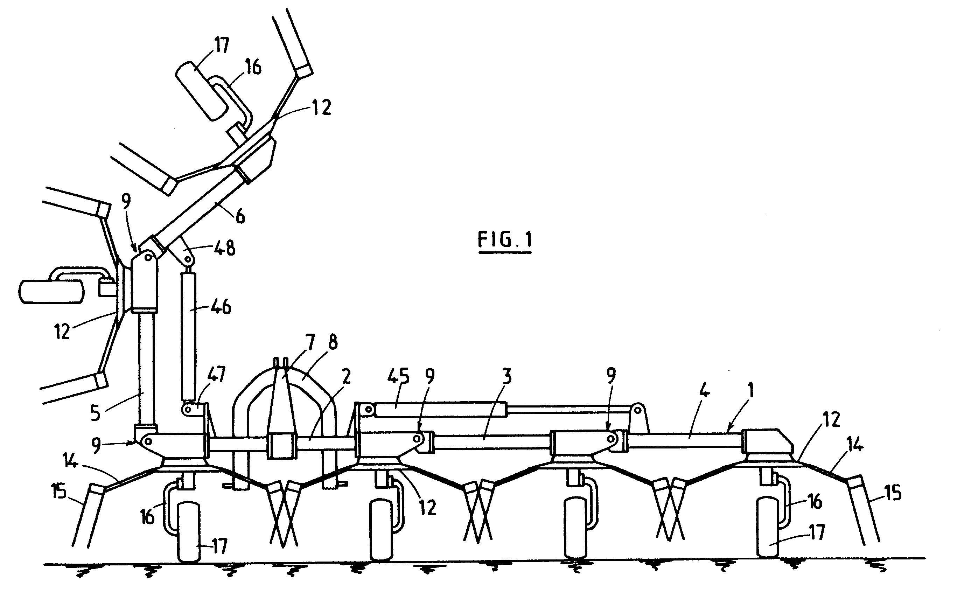

La machine agricole représentée sur la figure 1 est une faneuse avec une importante largeur de travail. Elle possède un châssis (1) composé d'un tronçon central (2) et de quatre tronçons latéraux (3 à 6) situés de part et d'autre du tronçon central (2). L'invention se rapporte toutefois aussi aux faneuses de largeur moins importante et n'ayant que deux tronçons latéraux articulés à un tronçon central. Ledit tronçon central (2) est muni d'une poutre (7) qui s'étend dans la direction de déplacement et porte à son extrémité avant un chevalet (8). Celui-ci est destiné à permettre l'accouplement de la machine au dispositif de relevage trois points d'un tracteur servant à la déplacer et à l'animer.

Ces tronçons (2 à 6) sont reliés entre eux au moyen d'articulations (9). Chaque articulation (9) comporte un axe de pivotement (10) ayant un axe géométrique (29) sensiblement horizontal et dirigé dans la direction d'avancement. Chacun de ces axes (10) est réalisé en deux parties qui sont alignées l'une par rapport à l'autre. Elles sont logées dans des alésages prévus dans des oreilles (11) des parois latérales des tronçons (2 à 6) du châssis (1).

Dans l'exemple représenté sur la figure 1, la machine comporte six rotors (12) situés sous le châssis (1). Le tronçon central (2) porte deux rotors (12) tandis que chaque tronçon latéral (3 à 6) est muni d'un seul rotor (12). Chacun de ces rotors (12) est constitué par un moyeu (13) auquel sont fixés plusieurs bras (14) qui portent des fourches de travail (15) à leurs extrémités extérieures. Chaque moyeu (13) est monté de manière à pouvoir tourner sur un axe support fixe (16) dirigé vers le haut et étant légèrement incliné dans la direction d'avancement de la machine.

Ces axes (16) sont fixés aux différents tronçons (2 à 6) du châssis (1) et portent à leurs extrémités inférieures des roulettes (17). Au travail celles-ci reposent sur le sol et permettent de déplacer la machine.

Les tronçons (2 à 6) du châssis (1) sont creux et renferment des arbres d'entraînement (18, 19) pour les rotors (12). A cet effet, lesdits arbres sont munis de pignons qui coopèrent avec des couronnes dentées reliées aux moyens (13) desdits rotors.

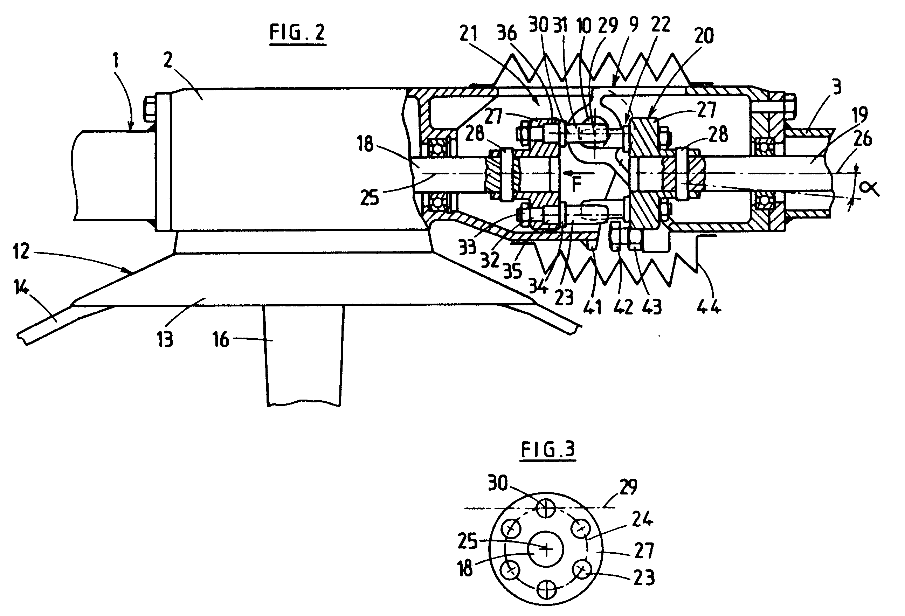

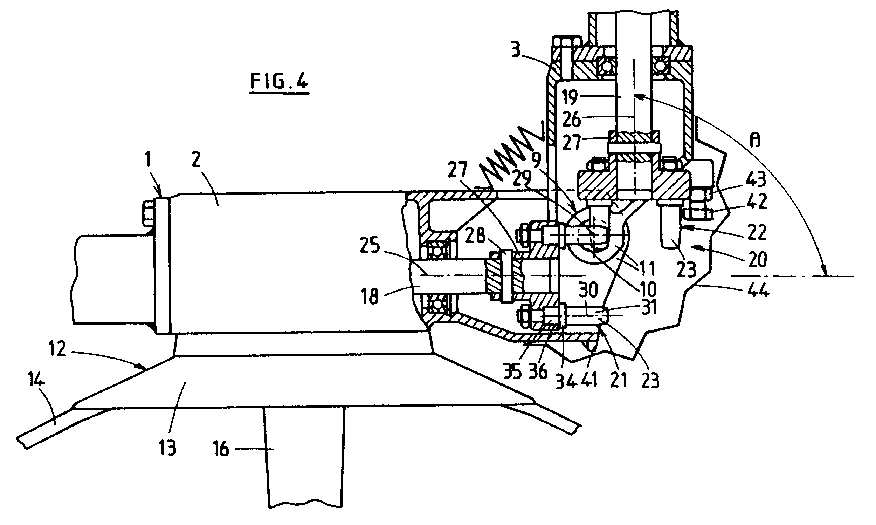

Il ressort notamment des figures 2 et 4 que les arbres d'entraînement (18, 19) comportent des accouplements (20) au niveau des articulations (9) entre les tronçons (2 à 6) du châssis (1). Chacun de ces accouplements (20) est constitué par deux ensembles (21, 22) de doigts (23) disposés en forme de cercles (24) ayant leurs centres sur les axes géométriques (25, 26) des arbres d'entraînement (18, 19) (voir figure 3). Chaque ensemble (21, 22) de doigts (23) est fixé sur un flasque (27) qui est lui même fixé sur l'extrémité d'un des arbres d'entraînement (18, 19) au moyen d'une goupille (28). La disposition de ces doigts (23) par rapport aux arbres d'entraînement (18, 19) est telle que les doigts (23) de deux ensembles (21, 22) voisins engrènent entre eux. Par ailleurs, les axes géométriques (29) des axes de pivotement (10) entre les tronçons (2 à 6) du châssis (1) sont sensiblement tangents à la circonférence des cercles (24) sur lesquels se situent les axes géométriques (30) des doigts (23) des accouplements (20) correspondants.

Afin que les tronçons latéraux (3 à 6) et les arbres d'entraînement (19) puissent notamment être déplacés vers le haut, lesdits axes géométriques (29) sont tangents à la moitié du cercle (24) qui se situe au-dessus des arbres d'entraînement (18, 19) lorsque ces derniers sont sensiblement alignés. De plus, lesdits axes géométriques (29) des axes de pivotement (10) s'étendent sensiblement dans un plan passant au milieu de la zone d'engrènement des doigts (23) de l'accouplement (20) correspondant.

Ces accouplements (20) ne nécessitent qu'un faible encombrement. De ce fait, les axes de pivotement (10) entre le tronçon central (2) et les tronçons latéraux (3 et 5) peuvent être très près des rotors (12) dudit tronçon central.

Chacun des ensembles (21, 22) se compose de six doigts (23) décalés entre eux d'angles d'environ 60°. La longueur de la partie active (31) des doigts (23) est nettement supérieure à la longueur sur laquelle ils engrènent lorsque les deux arbres d'entraînement (18, 19) qu'ils relient entre eux sont horizontaux (figure 2). L'espace qui subsiste dans cette position horizontale entre les extrémités avant des doigts (23) de l'un des ensembles (21, 22) et le flasque (27) de l'autre ensemble de doigts (23) est tel que chaque tronçon latéral (3 à 6) du châssis (1) et l'arbre d'entraînement (19) correspondant puisse pivoter vers le bas d'un angle (α) d'au moins 5° et vers le haut d'un angle (β ) supérieur à 90°. Cette possibilité de pivoter vers le bas permet aux rotors (12) des tronçons latéraux (3 à 6) de suivre la surface du sol lorsqu'elle présente une dépression.

Les doigts (23) sont fixés sur les flasques (27) de manière démontable. Ils peuvent ainsi facilement être remplacés en cas de détérioration. A cet effet, chaque doigt (23) comporte une extrémité arrière filetée (32) qui s'étend à travers un orifice prévu dans le flasque (27) et sur laquelle se visse un écrou de serrage (33). Chaque doigt (23) comporte aussi une collerette d'appui (34) et un segment de centrage (35). Ce dernier est logé dans un orifice (36) ayant une fonction de guidage, prévu dans le flasque (27). Cet orifice (36) est réalisé avec précision afin d'assurer un positionnement exact du doigt (23) qui y est engagé.

La position de chaque doigt (23) par rapport à son flasque (27) est réglable de manière à pouvoir modifier les surfaces qui sont en contact avec d'autres doigts (23). Pour cela il suffit de desserrer l'écrou (33) et de tourner le doigt (23) dans l'orifice (36), autour de son axe géométrique (30). On évite ainsi une usure locale des doigts (23) qui entraînerait une prise de jeu néfaste dans les accouplements (20).

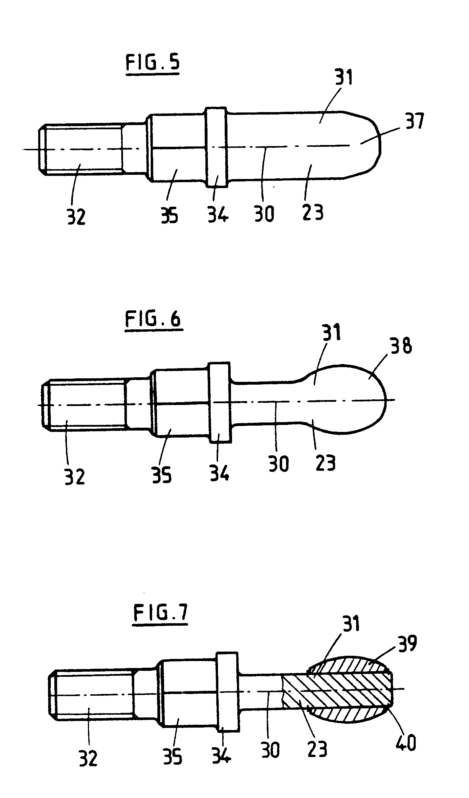

Le réglage précité des doigts (23) est facilité en prévoyant des orifices (36) et des segments de centrage (35) de forme polygonale. Dans ce cas, on peut déplacer chaque doigt (23) autant de fois que ladite section a de côtés. En sus, tous les doigts (23) peuvent facilement être déplacés d'un même angle. Dans les exemples de réalisation représentés sur les figures 5 à 7, les segments de centrage (35) ont une section carrée, ce qui permet de régler les doigts (23) dans quatre positions différentes.

Conformément à l'exemple de la figure 5, la partie active (31) des doigts (23) est cylindrique et comporte une extrémité (37) en forme de tronc de cône aux arêtes arrondies. Dans la position de travail, le contact entre les doigts (23) qui engrènent se fait sur les parties cylindriques, ce qui permet d'obtenir des zones de contact linéaire assez importantes. D'autre part, la forme de l'extrémité (37) permet aux doigts (23) des deux ensembles (21 et 22) qui engrènent, de se déplacer suivant des arcs de cercle autour de l'axe de pivotement (10). Il est toutefois avantageux de prévoir un léger jeu entre les doigts (23) afin d'éviter des coincements entre eux dans les zones situées latéralement par rapport aux arbres d'entraînement (18, 19) et dans lesquelles lesdits doigts (23) sont sensiblement les uns au-dessus des autres.

Dans l'exemple de réalisation selon la figure 6, la partie active (31) du doigt (23) présente une forme ovoïde (38). Dans ce cas, le contact entre les doigts (23) qui engrènent est ponctuel dans n'importe quelle position qu'ils peuvent occuper. De ce fait, les doigts (23) peuvent facilement se déplacer les uns par rapport aux autres.

Conformément à l'exemple de réalisation de la figure 7 la partie active (31) de chaque doigt (23) peut comporter une bague ou un galet (39) positionné au moyen de circlips (40). Cette bague ou ce galet (39) est facilement démontable de sorte qu'il puisse être remplacé en cas d'usure.

Les doigts (23) qui constituent les accouplements (20) peuvent subir un traitement thermique en vue d'augmenter leur dureté. Ce traitement peut être limité à la partie active (31) de chaque doigt (23).

Les parties actives (31) des doigts (23) peuvent aussi être revêtues d'une faible couche de matière plastique ou analogue, de manière à faciliter le glissement entre les doigts (23) et réduire le bruit lorsque lesdits doigts se rencontrent.

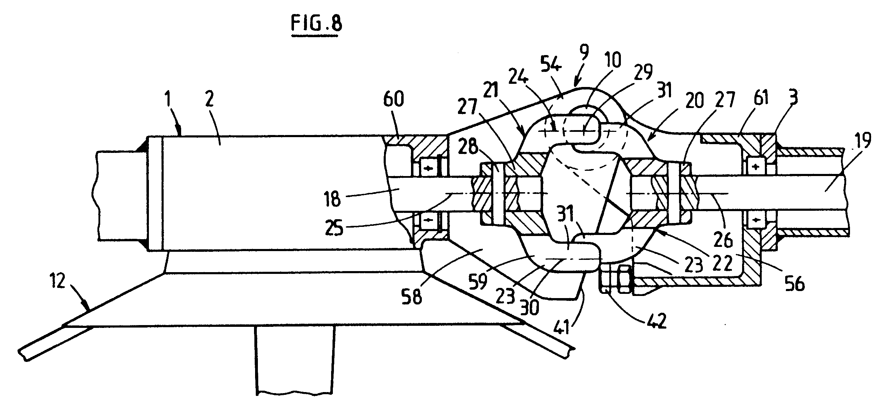

Dans l'exemple selon les figures 8 à 10, les tronçons (2 et 3) du châssis (1) sont articulés entre eux au moyen d'un axe de pivotement (10) en deux parties (49 et 50) sensiblement alignées. Ces parties sont logées dans des alésages prévus dans des oreilles (51, 52 et 53, 54) des parois latérales (55, 56 et 57, 58) des tronçons (2 et 3) du châssis (1). Ces oreilles (51 à 54) sont disposées respectivement devant et derrière les accouplements (20) - vu dans la direction d'avancement - entre les arbres d'entraînement (18 et 19) des rotors de la machine.

Ces accouplements (20) entre les arbres d'entraînement (18 et 19) se composent d'ensembles (21 et 22) à doigts (23) qui engrènent. Chacun de ces ensembles (21 ou 22) possède un moyeu ou flasque (27) à partir duquel s'étendent six doigts (23). Ce nombre n'est évidemment pas limitatif. Dans l'exemple représenté le flasque (27) et les doigts (23) sont réalisés en une seule pièce forgée. Chaque flasque (27) est fixé sur l'arbre d'entraînement (18, 19) correspondant avec une goupille (28).

Les parties actives (31) des doigts (23) de chaque ensemble (21 et 22) s'étendent horizontalement et sont reliées à leur flasque (27) par des coudes (59). Leurs axes géométriques (30) se situent sur des cercles (24) ayant leurs centres sur les axes géométriques (25 et 26) des arbres d'entraînement (18 et 19).

On voit sur la figure 8, que l'axe de pivotement (10) de l'articulation (9) entre les tronçons (2 et 3) est disposé de telle sorte que son axe géométrique (29) est sensiblement tangent à la circonférence des cercles (24) sur lesquels se situent les axes géométriques (30) des parties actives (31) des doigts (23) de l'accouplement (20) correspondant et, s'étend à proximité de la partie ou paroi supérieure (60 et 61) desdits tronçons.

Dans l'exemple représenté sur les figures 8 à 10, l'axe géométrique (29) de l'axe de pivotement (10) se situe plus haut que la partie ou paroi supérieure (60, 61) des deux tronçons (2 et 3). Ledit axe géométrique (29) peut cependant aussi être tangent à la partie ou paroi supérieure (60, 61) des tronçons (2 et 3) ou même se situer légèrement en dessous de cette partie ou paroi supérieure (60, 61) des tronçons (2 et 3).

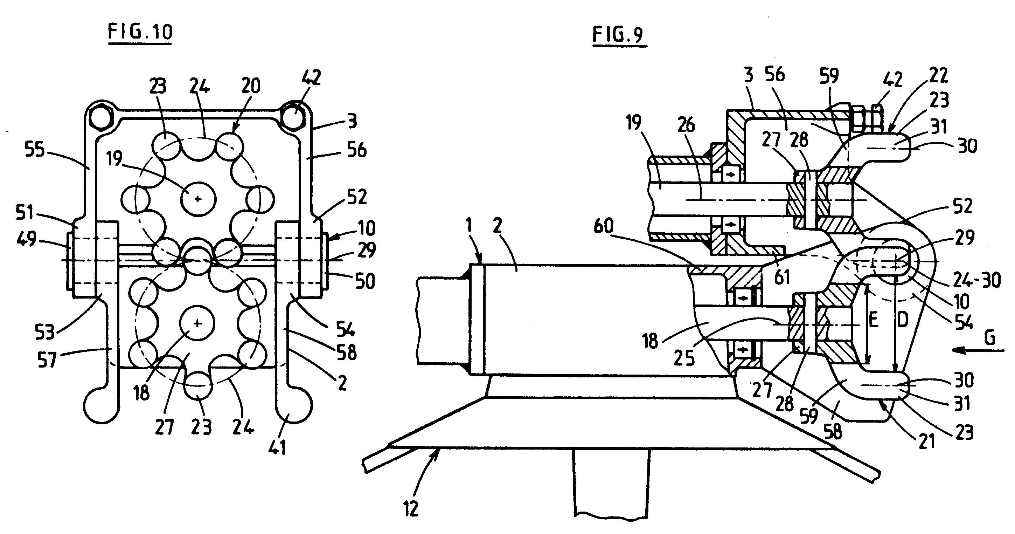

En vue de cet agencement, les oreilles (51 à 54) dans lesquelles sont logés les axes de pivotement (10) dépassent vers le haut la partie ou paroi supérieure (60, 61) des tronçons (2 et 3) (voir figure 8). Par ailleurs, les diamètres des cercles (24) sur lesquels se situent les axes géométriques (30) des parties actives (31) des doigts (23) sont relativement importants. En sus, la dimension extérieure (E) du flasque (27) de chaque ensemble (21, 22) de doigts (23) est inférieure à la distance (D) entre les parties actives de deux doigts (23) diamétralement opposés (voir figure 9). Cette caractéristique permet l'engrènement des doigts (23) d'un même accouplement (20) dans la position repliée. La différence entre les dimensions (E) et (D) est obtenue au moyen du coude (59) de chaque doigt (23).

Au niveau de leurs articulations (9) les tronçons (2 à 6) du châssis (1) sont munis de butées (41 et 42). Celles-ci se situent sur le côté inférieur desdits tronçons. Elles servent à limiter d'une part, les déplacements vers le bas des tronçons latéraux (3 à 6), autour des axes d'articulations (10) et, d'autre part, l'engrènement entre les doigts (23) des accouplements (20). L'une au moins desdites butées est avantageusement réglable. Dans l'exemple représenté, la butée (42) est constituée par une vis qui peut être bloquée dans différentes positions au moyen d'un écrou (43).

Les accouplements (20) entre les arbres d'entraînement (18 et 19) sont avantageusement entourés d'écrans de protection (44) empêchant leur encrassement. Ces écrans (44) peuvent avoir la forme de soufflets. Ils sont reliés aux extrémités des tronçons (2 à 6) correspondants (voir figures 2 et 4).

La machine comporte encore deux vérins hydrauliques (45, 46) pour lever les tronçons latéraux (3 à 6) du châssis (1). Chacun de ces vérins (45, 46) est articulé sur un appui (47) solidaire du tronçon central (2) et sur un appui (48) solidaire du tronçon latéral extérieur (4 ou 6). Ces vérins (45, 46) sont actionnés à partir du tracteur d'entraîtement. Ils peuvent être à double ou à simple effet. Dans ce dernier cas, le pivotement des tronçons latéraux (3 à 6) vers le bas se fait sous l'effet de leur propre poids.

Durant le travail, la machine occupe la position telle que représentée sur sa moitié droite sur la figure 1. Dans cette position, tous les rotors (12) sont sensiblement alignés. Il sont entraînés en rotation à partir de l'arbre de prise de force du tracteur via un arbre de transmission assurant la liaison entre ledit arbre de prise de force et l'arbre d'entraînement (18) logé dans le tronçon central (2) du châssis (1). Cet arbre (18) entraîne les deux autres arbres d'entraînement (19) qui sont logés dans les tronçons latéraux (3 à 6), à travers les accouplements (20). Tous les rotors (12) tournent alors, d'une manière connue en soi, deux à deux en convergence à l'avant - vu dans le sens d'avancement -. Par suite de cette rotation, leurs fourches (15) déplacent le fourrage se trouvant au sol et assurent un fanage de bonne qualité. Grâce aux articulations (9) du châssis (1) et aux accouplements (20) des arbres d'entraînement (18, 19), les rotors (12) peuvent se déplacer en hauteur durant le travail afin de bien suivre les dénivellations du sol.

Il est évident que des rotors destinés à faucher ou à effectuer des andains ou pouvant réaliser aussi bien du fanage que de l'andainage pourraient également être prévus sur cette machine.

Pour le transport et/ou la dépose, les tronçons latéraux (3 à 6) du châssis (1) peuvent être déplacés vers le haut autour des axes de pivotement (10), comme cela est représenté sur la moitié gauche de la machine de la figure 1 et sur la figure 4. Ce repliement vers le haut permet de réduire la largeur de la machine de manière à pouvoir la déplacer sur une route et pour le remisage. Il est obtenu au moyen des vérins hydrauliques (45 et 46) qui exercent une traction sur les tronçons latéraux (4 et 6) du châssis (1).

Dans la position de transport telle que représentée sur les figures 9 et 10, le tronçon extérieur (3) a été basculé d'un angle de 180° autour de l'axe de pivotement (10). Dans cette position, ledit tronçon (3) est pratiquement parallèle à l'autre tronçon (2). Plusieurs doigts (23) de l'accouplement (20) engrènent constamment et sont capables de transmettre le mouvement d'entraînement aussi bien durant le basculement précité que dans la position de transport. Bien que cela n'est pas représenté, on comprendra que la valeur de l'angle de pivotement qu'il est possible d'obtenir varie en fonction de la position de l'axe géométrique (29) de l'axe de pivotement (10). Ainsi, plus ledit axe géométrique est éloigné vers le haut de la partie ou paroi supérieure (60, 61) des tronçons (2 et 3) plus la valeur de l'angle de pivotement peut être augmentée. Au contraire, lorsque ledit axe géométrique (29) se situe sous la partie ou paroi supérieure (60, 61) la valeur de l'angle de pivotement diminue.

Cette dernière position convient parfaitement si on veut obtenir un repliement de l'ordre de 160° environ.

Sur une machine ayant un châssis (1) formé en cinq tronçons articulés entre eux, il est avantageux de relier au moins les deux tronçons extérieurs aux tronçons intérieurs au moyen d'articulations conformes à ce mode de réalisation. Il est ainsi possible de basculer ces tronçons extérieurs sur les tronçons intérieurs et de relever ensuite chaque paire de tronçons par rapport au tronçon central, jusque dans une position sensiblement verticale. La hauteur de la machine au transport est ainsi relativement faible.

D'autre part, si pendant le travail l'utilisateur veut momentanément lever les rotors (12) comme pour la position de transport, par exemple pour faire demi-tour, il n'est pas obligé de couper l'entraînement desdits rotors (12). Les accouplements (20) fonctionnent également sans risque d'être endommagés lorsque les arbres d'entraînement (18 et 19) forment entre eux des angles (β) supérieurs à 90°.

Il est, par ailleurs, bien évident que l'invention n'est pas limitée aux modes de réalisation décrits et représentés sur les dessins annexés. Des modifications restent possibles, notamment du point de vue de la constitution des divers éléments, ou par substitution d'équivalents techniques, sans sortir pour autant du domaine de protection conféré par les revendications.

## Revendications

1. Machine agricole, notamment pour la fenaison, possédant un châssis (1) portant plusieurs rotors (12) entraînés en rotation autour d'axes (16) dirigés vers le haut, lequel châssis (1) se compose d'un tronçon central (2) et de tronçons latéraux (3 à 6) qui sont reliés entre eux au moyen d'articulations (9) comportant chacune un axe de pivotement (10) permettant les déplacements des tronçons latéraux (3 à 6) et de leurs rotors (12) pour suivre les dénivellations du sol durant le travail et pour la mise en position de transport, des arbres d'entraînement (18, 19) pour les différents rotors (12) étant logés dans les tronçons (2 à 6) du châssis (1), ces arbres étant eux-mêmes reliés entre eux au moyen d'accouplements (20) situés au niveau des articulations (9) entre lesdits tronçons (2 à 6), caractérisée par le fait que chaque accouplement (20) entre les arbres d'entraînement (18, 19) est constitué de deux ensembles (21, 22) de doigts (23) disposés en forme de cercles (24) sur des flasques ou moyeux (27), que les axes géométriques (29) des axes de pivotement (10) entre les tronçons (2 à 6) du châssis (1) sont sensiblement tangents à la circonférence des cercles (24) sur lesquels se situent les axes géométriques (30) des doigts (23), que chaque ensemble (21, 22) est lié rigidement à l'extrémité d'un arbre d'entraînement (18, 19), de telle sorte que les doigts (23) de deux ensembles (21,22) voisins engrènent entre eux, que chaque doigt (23) possède une partie active (31) qui s'étend horizontalement et dont la longueur est nettement supérieure à la longueur sur laquelle lesdits doigts (23) engrènent entre eux lorsque les arbres d'entraînement (18, 19) correspondants sont horizontaux et que l'espace qui subsiste dans cette position horizontale entre les extrémités avant des doigts (23) de l'un des ensemble (21, 22) et le flasque ou moyeu (27) de l'autre ensemble de doigts (23) est tel que chaque tronçon latéral (3 à 6) du châssis (1) et l'arbre d'entraînement (19) correspondant puissent pivoter vers le bas d'un angle (α) d'au moins 5° et vers le haut d'un angle (β) supérieure à 90° en conservant l'engrènement des doigts (23).

2. Machine selon la revendication 1, caractérisée par le fait que les axes géométriques (29) des axes de pivotement (10) entre les tronçons (2 à 6) du châssis (1) sont dirigés dans la direction de déplacement de la machine et sont tangents à la moitié supérieure du cercle (24) sur lequel se situent les axes géométriques (30) des doigts (23).

3. Machine selon la revendication 2, caractérisée par le fait que l'axe géométrique (29) de l'axe de pivotement (10) de l'une ou plusieurs articulations (9) entre les tronçons (2 à 6) du châssis (1) s'étend à proximité de la partie ou paroi supérieure (60 et 61) desdits tronçons (2 à 6).

4. Machine selon l'une quelconque des revendications précédentes, caractérisée par le fait que chaque ensemble (21, 22) de doigts (23) comporte un flasque (27) dont la dimension extérieure (E) est inférieure à la distance (D) entre les parties actives (31) de deux doigts (23) diamétralement opposés.

5. Machine selon la revendication 4, caractérisée par le fait que les doigts (23) sont coudés.

6. Machine selon l'une quelconque des revendications précédentes, caractérisée par le fait que chaque ensemble de doigts (21, 22) se compose de six doigts (23) décalés entre eux d'angles d'environ 60°.

7. Machine selon l'une quelconque des revendications précédentes, caractérisée par le fait que les doigts (23) sont fixés de manière démontable sur des flasques (27) reliés aux extrémités des arbres d'entraînement (18, 19).

8. Machine selon la revendication 7, caractérisée par le fait que chaque doigt (23) comporte une extrémité filetée (32).

9. Machine selon l'une quelconque des revendications précédentes, caractérisée par le fait que chaque doigt (23) comporte un segment de centrage (35).

10. Machine selon l'une quelconque des revendications précédentes, caractérisée par le fait que la position des doigts (23) par rapport à leur flasque (27) est réglable.

11. Machine selon la revendication 9 ou 10, caractérisée par le fait que le segment de centrage (35) des doigts (23) a une section polygonale.

12. Machine selon l'une quelconque des revendications 1 à 6, caractérisée par le fait que chaque flasque (27) et ses doigts (23) sont réalisés en une seule pièce.

13. Machine selon l'une quelconque des revendications précédentes, caractérisée par le fait que la partie active (31) de chaque doigt (23) est cylindrique et comporte une extrémité (37) en forme de tronc de cône aux arêtes arrondies.

14. Machine selon l'une quelconque des revendications précédentes, caractérisée par le fait qu'il est prévu un léger jeu entre les doigts (23) des deux ensembles (21, 22) qui engrènent.

15. Machine selon l'une quelconque des revendications 1 à 12, caractérisée par le fait que la partie active (31) de chaque doigt (23) présente une forme ovoïde (38).

16. Machine selon l'une quelconque des revendications 1 à 12, caractérisée par le fait que la partie active (31) de chaque doigt (23) présente une bague ou un galet (39).

17. Machine selon l'une quelconque des revendications précédentes, caractérisée par le fait que les doigts (23) sont traités pour augmenter leur dureté.

18. Machine selon l'une quelconque des revendications précédentes, caractérisée par le fait qu'au moins les parties actives (31) des doigts (23) comportent un revêtement en matière plastique ou analogue.

19. Machine selon l'une quelconque des revendications précédentes, caractérisée par le fait que les accouplements (20) sont entourés par des écrans (44) extensibles, reliés aux extrémités des tronçons (2 à 6) correspondants du châssis (1).

20. Machine selon l'une quelconque des revendications précédentes, caractérisée par le fait que chaque tronçon (2 à 6) du châssis (1) est muni de butées (41, 42) sur son côté inférieur.

## Claims

1. An agricultural machine, especially for hay making, having a frame (1) carrying several rotors (12) driven in rotation around upwardly directed axes (16), the frame (1) being made up from a central section (2) and side sections (3 to 6) which are connected together by means of articulations (9) each comprising a pivoting axis (10) permitting the displacement of the side sections (3 to 6) and of their rotors (12) so as to follow the differing levels of the soil during work and for the placing into the transport position, drive shafts (18, 19) for the different rotors (12) being housed in the sections (2 to 6) of the frame (1), these shafts being themselves connected together by means of couplings (20) situated in the region of the articulations (9) between the said sections (2 to 6), characterised in that each coupling (20) between the drive shafts (18, 19) is made from two assemblies (21, 22) of fingers (23) arranged in the form of circles (24) on plates or hubs (27), in that the geometric axes (29) of the pivoting axes (10) between the sections (2 to 6) of the flame (1) are approximately tangent to the circumference of the circles (24) on which the geometric axes (30) of the fingers (23) are situated, in that each assembly (21, 22) is rigidly connected to the end of a drive shaft (18, 19), in such a way that the fingers (23) of two neighbouring assemblies (21, 22) engage with each other, in that each finger (23) has an active part (31) which extends horizontally and whose length is slightly greater than the length along which the said fingers (23) engage with each other when the corresponding drive shafts (18, 19) are horizontal and in that the space which exists in this horizontal position between the front ends of the fingers (23) of one of the assemblies (21, 22) and the plate or hub (27) of the other assembly of fingers (23) is such that each side section (3 to 6) of the flame (1) and the corresponding drive shaft (19) may pivot downwards at an angle (α) of at least 5° and upwards at an angle (β) greater than 90° while maintaining the engagement of the fingers (23).

2. A machine in accordance with claim 1, characterised in that the geometric axes (29) of the pivoting axes (10) between the sections (2 to 6) of the frame (1) are directed in the direction of displacement of the machine and are tangent to the upper half of the circle (24) on which are situated the geometric axes (30) of the fingers (23).

3. A machine in accordance with claim 2, characterised in that the geometric axis (29) of the pivoting axis (10) of one or several articulations (9) between the sections (2 to 6) of the frame (1) extend close to the upper part or wall (60 and 61) of the said sections (2 to 6).

4. A machine in accordance with any of the preceding claims, characterised in that each assembly (21, 22) of fingers (23) has a plate (27) whose outer dimension (E) is less than the distance (D) between the active parts (31) of two diametrically opposed fingers (23).

5. A machine in accordance with claim 4, characterised in that the fingers (23) are curved.

6. A machine in accordance with any of the preceding claims, characterised in that each assembly of fingers (21, 22) comprises six fingers (23) offset from each other at angles of about 60°.

7. A machine in accordance with any of the preceding claims, characterised in that the fingers (23) are fixed in a removable manner onto the plates (27) connected to the ends of the drive shafts (18, 19).

8. A machine in accordance with claim 7, characterised in that each finger (23) has a threaded end (32).

9. A machine in accordance with any of the preceding claims, characterised in that each finger (23) has a centring segment (35).

10. A machine in accordance with any of the preceding claims, characterised in that the position of the fingers (23) in relation to their plate (27) is adjustable.

11. A machine in accordance with claim 9 or 10, characterised in that the centring segment (35) of the fingers (23) has a polygonal section.

12. A machine in accordance with any of the claims 1 to 6, characterised in that each plate (27) and its fingers (23) are made in a single piece.

13. A machine in accordance with any of the preceding claims, characterised in that the active part (31) of each finger (23) is cylindrical and has an end (37) in the form of a truncated cone with rounded edges.

14. A machine in accordance with any of the preceding claims, characterised in that slight play is foreseen between the fingers (23) of the two assemblies (21, 22) which engage.

15. A machine in accordance with any of the claims 1 to 12, characterised in that the active part (31) of each finger (23) has an ovoid shape (38).

16. A machine in accordance with any of the claims 1 to 12, characterised in that the active part (31) of each finger (23) has a ring or a roller (39).

17. A machine in accordance with any of the preceding claims, characterised in that the fingers (23) are treated to increase their hardness.

18. A machine in accordance with any of the preceding claims, characterised in that at least the active parts (31) of the fingers (23) have a coating of plastic or a similar material.

19. A machine in accordance with any of the preceding claims , characterised in that the couplings (20) are surrounded by expandible screens (44), connected to the ends of the corresponding sections (2 to 6) of the frame (1).

20. A machine in accordance with any of the preceding claims, characterised in that each section (2 to 6) of the frame (1) is equipped with stops (41,42) on its under side.

## Patentansprüche

1. Landmaschine, insbesondere zur Heuwerbung, die einen Stützrahmen (1) aufweist, der mehrere Rechräder (12) trägt, die um nach oben gerichtete Achsen (16) drehbar angetrieben werden, welcher Stützrahmen (1) aus einem Mittelstück (2) und Seitenstücken (3 bis 6) besteht, die untereinander mittels Gelenken (9) verbunden sind, von welchen jedes eine Schwenkachse (10) aufweist, die Versetzungen der Seitenstücke (3 bis 6) und ihrer Rechräder (12) ermöglichen, um Bodenunebenheiten während der Arbeit zu folgen und für die Einstellung der Transportstellung, wobei Antriebswellen (18, 19) für die verschiedenen Rechräder (12) in den Stücken (2 bis 6) untergebracht sind, welche Wellen selbst miteinander mittels Kupplungen (20) verbunden sind, die in der Nähe der Gelenke (9) zwischen den Stükken (2 bis 6) angeordnet sind, dadurch gekennzeichnet, daß jede Kupplung (20) zwischen den Antriebswellen (18, 19) aus zwei Einheiten (21, 22) von Zapfen (23) besteht, die in Form von Kreisen (24) auf Flanschen oder Naben (27) angeordnet sind, daß die geometrischen Achsen (29) der Schwenkachsen (10) zwischen den Stücken (2 bis 6) des Stützrahmens (1) im wesentlichen Tangenten am Umfang der Kreise (24) sind, auf welchen sich die geometrischen Achsen (30) der Zapfen (23) befinden, daß jede Einheit (21, 22) derart mit dem Ende einer Antriebswelle (18, 19) fest verbunden ist, daß die Zapfen (23) der beiden benachbarten Einheiten (21, 22) ineinandergreifen, daß jeder Zapfen (23) einen aktiven Teil (31) besitzt, der sich horizontal erstreckt, und dessen Länge deutlich größer ist als die Länge, auf welcher die Zapfen (23) ineinandergreifen, wenn die entsprechenden Antriebswellen (18, 19) horizontal sind, und daß der verbleibende Abstand in dieser Horizontalstellung zwischen den vorderen Enden der Zapfen (23) der einen Einheit (21, 22) und dem Flansch oder der Nabe (27) der anderen Einheit von Zapfen (23) derart ist, daß jedes Seitenstück (3 bis 6) des Stützrahmens (1) und die entsprechende Antriebswelle (19) nach unten in einem Winkel (α) von mindestens 5° und nach oben in einem Winkel (β) größer als 90° verschwenken kann, wobei das Ineinandergreifen von Zapfen (23) erhalten bleibt.

2. Maschine nach Anspruch 1, dadurch gekennzeichnet, daß die geometrischen Achsen (29) der Schwenkachsen (10) zwischen den Stücken (2 bis 6) des Stützrahmens (1) in die Versetzungsrichtung der Maschine gerichtet sind und Tangenten an der oberen Hälfte des Kreises (24) sind, auf welchem sich die geometrischen Achsen (30) der Zapfen (23) befinden.

3. Maschine nach Anspruch 2, dadurch gekennzeichnet, daß die geometrische Achse (29) der Schwenkachse (10) eines oder mehrerer Gelenke (9) zwischen den Stücken (2 bis 6) des Stützrahmens (1) sich in die Nähe des oberen Teiles oder der Wand (60, 61) der Stücke (2 bis 6) erstreckt.

4. Maschine nach irgendeinem der vorhergehenden Ansprüche, dadurch gekennzeichnet, daß jede Einheit (21, 22) von Zapfen (23) einen Flansch (27) umfaßt, dessen Außenabmessung (E) kleiner ist als der Abstand (D) zwischen den aktiven Teilen (31) von zwei diametral gegenüberliegenden Zapfen (23).

5. Maschine nach Anspruch 4, dadurch gekennzeichnet, daß die Zapfen (23) gekröpft sind.

6. Maschine nach irgendeinem der vorhergehenden Ansprüche, dadurch gekennzeichnet, daß jede Einheit von Zapfen (21, 22) sechs Zapfen (23) umfaßt, die zueinander in Winkeln von ungefähr 60° versetzt sind.

7. Maschine nach irgendeinem der vorhergehenden Ansprüche, dadurch gekennzeichnet, daß die Zapfen (23) demontierbar auf den Flanschen (27) befestigt sind, die mit den Enden der Antriebswellen (18, 19) verbunden sind.

8. Maschine nach Anspruch 7, dadurch gekennzeichnet, daß jeder Zapfen (23) ein mit Gewinde versehenes Ende (32) aufweist.

9. Maschine nach irgendeinem der vorhergehenden Ansprüche, dadurch gekennzeichnet, daß jeder Zapfen (23) ein Zentriersegment (35) aufweist.

10. Maschine nach irgendeinem der vorhergehenden Ansprüche, dadurch gekennzeichnet, daß die Stellung der Zapfen (23) zu ihrem Flansch (27) einstellbar ist.

11. Maschine nach Anspruch 9 oder 10, dadurch gekennzeichnet, daß das Zentriersegment (35) des Zapfens (23) einen polygonalen Querschnitt hat.

12. Maschine nach irgendeinem der Ansprüche 1 bis 6, dadurch gekennzeichnet, daß jeder Flansch (27) und seine Zapfen (23) einstückig ausgebildet sind.

13. Maschine nach irgendeinem der vorhergehenden Ansprüche, dadurch gekennzeichnet, daß der aktive Teil (31) jedes Zapfens (23) zylindrisch ist und ein Ende (37) in Form eines Kegelstumpfes mit abgerundeten Endkanten aufweist.

14. Maschine nach irgendeinem der vorhergehenden Ansprüche, dadurch gekennzeichnet, daß zwischen den Zapfen (23) der zwei Einheiten (21, 22), die ineinandergreifen, ein geringes Spiel vorgesehen ist.

15. Maschine nach irgendeinem der Ansprüche 1 bis 12, dadurch gekennzeichnet, daß der aktive Teil (31) jedes Zapfens (23) eine annähernd eiförmige Form (38) aufweist.

16. Maschine nach irgendeinem der Ansprüche 1 bis 12, dadurch gekennzeichnet, daß der aktive Teil (31) jedes Zapfens (23) einen Ring oder eine Rolle (39) aufweist.

17. Maschine nach irgendeinem der vorhergehenden Ansprüche, dadurch gekennzeichnet, daß die Zapfen (23) zur Erhöhung ihrer Härte behandelt sind.

18. Maschine nach irgendeinem der vorhergehenden Ansprüche, dadurch gekennzeichnet, daß zumindest die aktiven Teile (31) der Zapfen (23) einen Belag aus Kunststoffmaterial oder dergleichen aufweisen.

19. Maschine nach irgendeinem der vorhergehenden Ansprüche, dadurch gekennzeichnet, daß die Kupplungen (20) von ausdehnbaren Abdeckungen umgeben sind, die mit den Enden der entsprechenden Stücke (2 bis 6) des Stützrahmens (1) verbunden sind.

20. Maschine nach irgendeinem der vorhergehenden Ansprüche, dadurch gekennzeichnet, daß jedes Stück (2 bis 6) des Stützrahmens (1) mit Anschlägen (41, 42) an seiner Unterseite versehen ist.
